# EUROPEAN PATENT APPLICATION

(11) **EP 4 513 399 A1**
(43) Date of publication of application: **26.02.2025**
(21) Application number: 24195976.6
(22) Date of filing: 22.08.2024
(51) Int. Cl.: G06Q 10/0631, G06F 3/06, G06Q 50/02

(54) **COMMERCE PLATFORM FOR DATA MANAGEMENT SERVICES OFFERINGS**

(30) Priority: 23.08.2023 US 202363578172 P
(71) Applicant: Services Pétroliers Schlumberger, 75007 Paris (FR); GeoQuest Systems B.V., 2514 JG The Hague (NL)
(72) Inventor: Bapat, Akshay Shrirang, 411006 Pune (IN); Agrawal, Pradeep, 411006 Pune (IN); Campbell, Jeremy, Leeds, LS10 1SB (GB); Dartez, Merlin, Houston, TX 77042 (US); Makhijani, Hemantkumar Prakashbhai, 411006 Pune (IN); Sinhal, Abhishek, 411006 Pune (IN); Douglas, Mark Gerrard, London, SW1E 6AJ (GB)
(74) Representative: Schlumberger Intellectual Property Department

(57) **Abstract**

Systems and methods presented herein enable a commerce platform for providing a plurality of data management services offerings via a single integrated oilfield services management application. For example, the commerce platform may provide an oilfield services management application to enable interaction with a plurality of integrated data management services offerings, wherein the data management services offerings comprise a data assessment services module for evaluating data associated with deployment of one or more oilfield services and/or one or more oilfield products; a cost analyzer module for estimating costs associated with migrating the data associated with the deployment of the one or more oilfield services and/or the one or more oilfield products to a standardized data platform; and a data management services module for performing operations on the data associated with the deployment of one or more oilfield services and/or one or more oilfield products.

## Description

### CROSS-REFERENCE TO RELATED APPLICATION

This application claims priority to and the benefit of U.S. Provisional Patent Application Serial No. 63/578,172, entitled "COMMERCE PLATFORM FOR DATA MANAGEMENT SERVICES OFFERINGS," filed August 23, 2023, which is hereby incorporated by reference in its entirety for all purposes.

### BACKGROUND

The present disclosure generally relates to systems and methods for a commerce platform for providing a plurality of data management services offerings (e.g., a data assessment services module, a cost analyzer module for data migration, and a data management services module) via a single integrated oilfield services management application.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as an admission of any kind.

Oilfield services companies provide myriad oilfield-related solution offerings for downstream and upstream customers across the globe. The relatively complexity of, as well as the need to customize, such oilfield-related solution offerings leads to a need to facilitate the purchase and deployment of such services. Unfortunately, certain customers are relatively smaller entities that may not have sophisticated enterprise software to facilitate the planning and implementation of such services. As such, there is a need to provide a robust commerce platform to facilitate such needs.

### SUMMARY

A summary of certain embodiments described herein is set forth below. It should be understood that these aspects are presented merely to provide the reader with a brief summary of these certain embodiments and that these aspects are not intended to limit the scope of this disclosure.

Certain embodiments of the present disclosure include an oilfield services commerce platform that includes one or more processors configured to execute processor-executable instructions stored in memory media. The processor-executable instructions, when executed by the one or more processors, cause the oilfield services commerce platform to provide an oilfield services management application for execution via computing devices to enable interaction with a plurality of integrated data management services offerings of the oilfield services commerce platform. The integrated data management services offerings include a data assessment services module for evaluating data associated with deployment of one or more oilfield services and/or one or more oilfield products; a cost analyzer module for estimating costs associated with migrating the data associated with the deployment of the one or more oilfield services and/or the one or more oilfield products to a standardized data platform; and a data management services module for performing operations on the data associated with the deployment of one or more oilfield services and/or one or more oilfield products.

Certain embodiments of the present disclosure also include a computer-implemented method that includes providing, via an oilfield services commerce platform, an oilfield services management application for execution via computing devices to enable interaction with a plurality of integrated data management services offerings of the oilfield services commerce platform. The plurality of integrated data management services offerings include a data assessment services module, a cost analyzer module, and a data management services module. The computer-implemented method also includes evaluating, via the data assessment services module of the oilfield services commerce platform, data associated with deployment of one or more oilfield services and/or one or more oilfield products. The computer-implemented method further includes estimating, via the cost analyzer module of the oilfield services commerce platform, costs associated with migrating the data associated with the deployment of the one or more oilfield services and/or the one or more oilfield products to a standardized data platform. In addition, the computer-implemented method includes performing, via the data management services module of the oilfield services commerce platform, operations on the data associated with the deployment of one or more oilfield services and/or one or more oilfield products.

Certain embodiments of the present disclosure also include an oilfield services commerce platform configured to provide an oilfield services management application for execution via computing devices to enable interaction with a plurality of integrated data management services offerings of the oilfield services commerce platform. The integrated data management services offerings include a data assessment services module for evaluating data associated with deployment of one or more oilfield services and/or one or more oilfield products, a cost analyzer module for estimating costs associated with migrating the data associated with the deployment of the one or more oilfield services and/or the one or more oilfield products to a standardized data platform, and a data management services module for performing operations on the data associated with the deployment of one or more oilfield services and/or one or more oilfield products.

Various refinements of the features noted above may be undertaken in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings, in which:
FIG. 1 is a schematic diagram of a commerce platform that facilitates an oilfield services customer to interact with an oilfield services company to evaluate and procure various oilfield services and/or oilfield products, in accordance with embodiments of the present disclosure;
FIG. 2 illustrates various data management service provided by the commerce platform of FIG. 1, in accordance with embodiments of the present disclosure;
FIG. 3 is a schematic diagram of the various components of the commerce platform of FIG. 1, in accordance with embodiments of the present disclosure;
FIG. 4 illustrates a workflow for utilizing a cost analyzer of the commerce platform of FIG. 1, in accordance with embodiments of the present disclosure; and
FIG. 5 is a flow diagram of a method for providing a plurality of data management services offerings via a single integrated oilfield services management application, in accordance with embodiments of the present disclosure.

### DETAILED DESCRIPTION

One or more specific embodiments of the present disclosure will be described below. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

As used herein, the terms "connect," "connection," "connected," "in connection with," and "connecting" are used to mean "in direct connection with" or "in connection with via one or more elements"; and the term "set" is used to mean "one element" or "more than one element." Further, the terms "couple," "coupling," "coupled," "coupled together," and "coupled with" are used to mean "directly coupled together" or "coupled together via one or more elements." As used herein, the terms "up" and "down," "uphole" and "downhole", "upper" and "lower," "top" and "bottom," and other like terms indicating relative positions to a given point or element are utilized to more clearly describe some elements. Commonly, these terms relate to a reference point as the surface from which drilling operations are initiated as being the top (e.g., uphole or upper) point and the total depth along the drilling axis being the lowest (e.g., downhole or lower) point, whether the well (e.g., wellbore, borehole) is vertical, horizontal or slanted relative to the surface.

In addition, as used herein, the terms "real time," "real-time," or "substantially real time" may be used interchangeably and are intended to described operations (e.g., computing operations) that are performed without any human-perceivable interruption between operations. For example, as used herein, data relating to the systems described herein may be collected, transmitted, and/or used in control computations in "substantially real time" such that data readings, data transfers, and/or data processing steps occur once every second, once every 0.1 second, once every 0.01 second, or even more frequent, during operations of the systems (e.g., while the systems are operating). In addition, as used herein, the terms "automatic," "automated," and "autonomous" are intended to describe operations that are performed are caused to be performed, for example, by a control system (i.e., solely by the control system, without human intervention).

The embodiments described herein generally include systems and methods for providing a commerce platform (e.g., a portal-style web-enabled commerce application) provided by an oilfield services company from which downstream and upstream customers of the oilfield services company may order oilfield-related solutions to be deployed anywhere in the world. For example, in certain embodiments, the commerce platform may include a petrotechnical suite, a corporate planning suite, a field development planning suite, and so forth. A customer may be provided with a wide range of solution offerings provided by the oilfield services company, which any customer may choose desired solutions and products and purchase the same by paying the associated prices. After the solution deployment order has been placed and paid for, setting up appropriate accounts may be the next step, after which deployed solutions may be consumed by the customer for their targeted usage. Once the accounts have been setup, the customer may then log into the commerce platform and may have paid and unpaid subscriptions to domain-specific products and service offerings from the oilfield services company.

While the process of ordering oilfield-related products and services may be relatively manageable for national oil companies or large-scale independent oil companies, the process may be cumbersome for small-scale oil and gas industries or customers interested in pure services engagements. In addition, post-solution deployments often require many manual interventions through sales organizations of the oilfield services company to ensure that correct data is provided to the customer relative to the order solution(s) for the targeted usage. For buying certain data management service(s), the customer may have to go through a relatively long chain of solution deployments followed by enterprise account setup, choosing the correct data management services applications and then subscribing to the data management services applications to order the desired services.

The embodiments described herein present a commerce platform hosting data management services to enable customers to order oilfield-related products and/or services. The commerce platform described herein not only eliminates ordering process overheads, but also enables all large- and small-scale upstream and downstream oil and gas customers to order any and all data management services without having to depend on setting up enterprise accounts and then ordering the desired oilfield-related products and/or services. The solution deployments and data management services may be ordered in parallel by any desired customer with this integration.

With the data management services hosted by the commerce platform described herein, any upstream or downstream oil and gas industry customers may access these services without having to setup enterprise accounts with the commerce platform. These services are also going to be usable for any new and renewable energy sector as data would be very important in every single domain and industry. With relatively simplistic user interfaces and an enhanced pricing engine, any customer could access these services with minimalistic manual intervention. The automated integrations within these services would enable the customer to complete its desired user experience with the data management service. It has been found that the automations presented herein may save approximately 2-4 man-days per data assessment service along with significant savings in the form of reduced consultation time of at least a man-day for cost optimization per migration purchase.

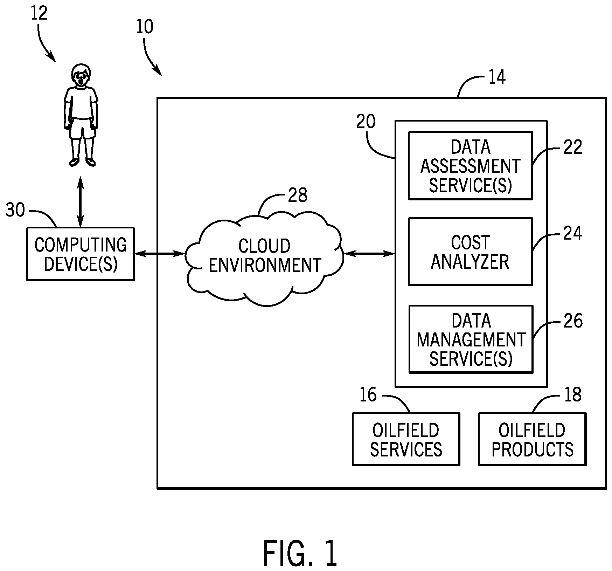

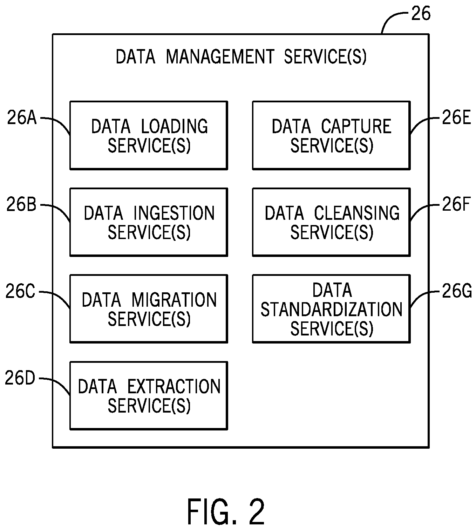

With the foregoing in mind, FIG. 1 is a schematic diagram of a commerce platform 10 that facilitates an oilfield services customer 12 to interact with an oilfield services company 14 to evaluate and procure various oilfield services 16 and/or oilfield products 18, as described in greater detail herein. As illustrated in FIG. 1, in certain embodiments, the commerce platform 10 may include various data management services offerings 20 associated with the provision of the oilfield services 16 and/or oilfield products 18, which may generally be split into three main categories, namely, a data assessment services module 22, a cost analyzer module 24 for open subsurface data universe (OSDU) data migration, and a data management services module 26. As illustrated in FIG. 2, the data management services module 26 may involve relatively complex data management services offerings from the oilfield services company such as data loading services 26A, data ingestion services 26B, data migration services 26C, and data extraction services 26D, among other services. These provided services may also be inclusive of other data management services such as data capture services 26E, data cleansing services 26F, data standardization services 26G, and so forth.

While the data management services offerings 20 illustrated in FIG. 1 generally have three distinctive services offering categories 22, 24, 26 in the commerce platform 10, all three of the services offering categories 22, 24, 26 are integrated closely with each other. For example, when a customer 12 assesses the data volumes using the data assessment services module 22, the customer 12 may be prompted to use the cost analyzer module 24 for migration to have the estimated cost of migration, including cloud provisioning based on the assessment of the data performed via the data assessment services module 22, and the customer 12 may receive an estimate of the data migration, cloud computing costs, cloud and service maintenance costs, and so forth. The customer 12 may also optimize the costs by adding or deleting data volumes assessed using the data assessment services module 22 by, for example, customizing cloud resources of a cloud environment 28, or alternatively proceed with the earlier standard estimations. Post-ordering the cloud analyzer services from the commerce platform 10, the request may be sent to a cloud deployment team and the desired cloud environment of the customer 12 may be setup and provisioned, enabling the customer 12 to order further data management services from the commerce platform 10.

In certain situations, the customer 12 may be given a set of available and desired targets wherein the customer 12 would want the assessed data to be made available for targeted usage, such as OSDU within the customer environment, OSDU within the cloud environment 28 of the oilfield services company 14, a petrotechnical suite, and a data ecosystem. On providing the desired targets, the customer 12 may provide a delivery preference as to standard or a high priority. Based on the desired targets, delivery preference and the source data volume that was assessed via the data assessment services module 22, quotation of the oilfield services 16 and/or oilfield products 18 may be generated and presented upfront to the customer 12. On purchasing the oilfield services 16 and/or oilfield products 18, a unique service request identification number may be generated. The request may then be passed to the petrotechnical experts of the oilfield services company 14 for executing the requested oilfield services 16, for example. At regular intervals, the petrotechnical experts of the oilfield services company 14 may update the request progress to let the customer 12 know about the ordered oilfield services 16 and/or oilfield products 18 and when they may be ready for further targeted usages.

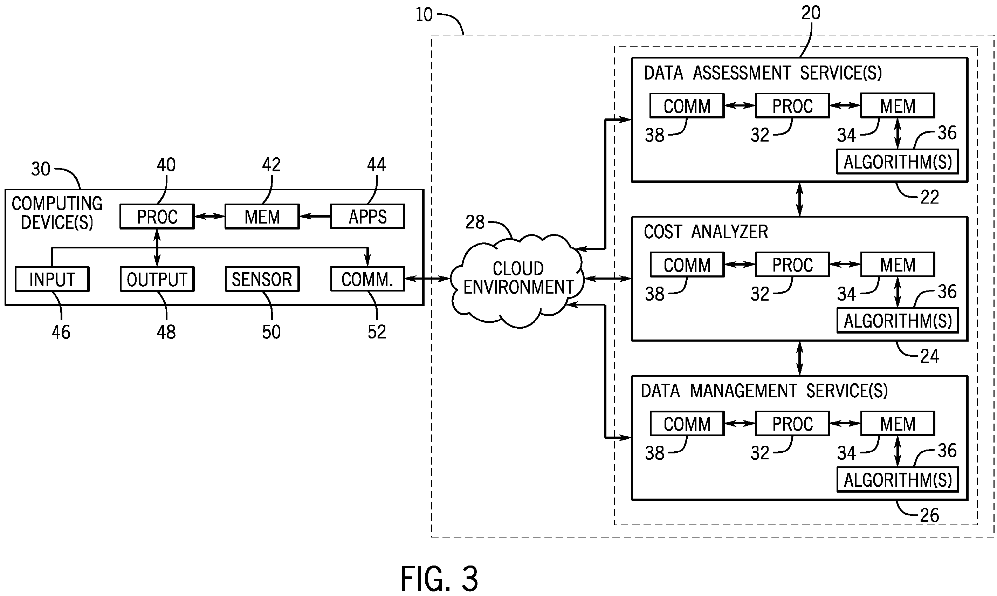

As illustrated in FIG. 1, customers 12 may interact with the commerce platform 10 of the oilfield services company 14 via computing devices 30. As illustrated in FIG. 3, each of the data management services offerings 20 (e.g., the data assessment services module 22, the cost analyzer module 24, and the data management services module 26) may be implemented using various computing resources that may, for example, be accessible as part of a cloud environment 28. For example, in certain embodiments, the data management services offerings 20 may each include one or more processors 32. In certain embodiments, the processors 32 may be operatively connected to one or more memory media 34, and may execute coded instructions present in the memory media 34 to implement the techniques described herein. In certain embodiments, the machine-readable coded instructions may include one or more processing algorithms 36 that, when executed by the processors 32 of the data management services offerings 20, may facilitate the commerce platform 10 performing the techniques described herein. In certain embodiments, the processors 32 may include one or more processors of various types suitable to the application environment, and may include one or more of general-purpose computers, special-purpose computers, microprocessors, digital signal processors (DSPs), field-programmable gate arrays (FPGAs), application-specific integrated circuits (ASICs), and processors based on a multi-core processor architecture, as non-limiting examples. Of course, other processors from other families are also appropriate.

In certain embodiments, the memory media 34 may include random access memory (RAM), static random access memory (SRAM), synchronous dynamic random access memory (SDRAM), dynamic random access memory (DRAM), RAMBUS dynamic random access memory (RDRAM), and/or other types of random access memory devices. In addition, in certain embodiments, the memory media 34 may include read-only memory, flash memory, and/or other types of memory devices.

In certain embodiments, the data management services offerings 20 may also each include communication interfaces 38, which may include various types of standard interfaces, such as an Ethernet interface, a universal serial bus (USB), a third generation input/output (3GIO) interface, a wireless interface, a cellular interface, and/or a satellite interface, among others. In certain embodiments, the communication interfaces 38 may also include communication devices, such as a modem or network interface card to facilitate exchange of data with the computing devices 30, and any other external computing devices via the commerce platform 10, as described in greater detail herein.

In addition, in certain embodiments, the computing devices 30 may include one or more processors 40. In certain embodiments, the processors 40 may be operatively connected to one or more memory media 42, and may execute coded instructions, such as an oilfield services management application 44, stored in the memory media 42. In certain embodiments, the processors 40 may execute, among other things, the machine-readable coded instructions to implement the techniques described herein. In certain embodiments, the oilfield services management application 44 stored in the memory media 42 may include program instructions or computer program code that, when executed by the processors 40 of the computing devices 30, may facilitate the commerce platform 10 performing the techniques described herein. In certain embodiments, the processors 40 may include one or more processors of various types suitable to the application environment, and may include one or more of general-purpose computers, special-purpose computers, microprocessors, digital signal processors (DSPs), field-programmable gate arrays (FPGAs), application-specific integrated circuits (ASICs), and processors based on a multi-core processor architecture, as non-limiting examples. Of course, other processors from other families are also appropriate.

In certain embodiments, the memory media 42 may include random access memory (RAM), static random access memory (SRAM), synchronous dynamic random access memory (SDRAM), dynamic random access memory (DRAM), RAMBUS dynamic random access memory (RDRAM), and/or other types of random access memory devices. In addition, in certain embodiments, the memory media 42 may include read-only memory, flash memory, and/or other types of memory devices.

In certain embodiments, the computing devices 30 may include one or more input devices 46, which may permit customers 12 to make certain inputs to request various oilfield services 16 and/or oilfield products 18, as described in greater detail herein. In certain embodiments, the input devices 46 may include a keyboard, a mouse, a joystick, a touchscreen, a track-pad, and/or a trackball. In addition, in certain embodiments, the input devices 46 may include a facial recognition device, voice recognition device, and/or biometric data entry device, among other examples, which may be used to authenticate a customer 12 associated with the respective computing device 30 for the purpose of authorizing interaction with the commerce platform 10. For example, in certain embodiments, a customer 12 may be identified by the input devices 46, and information managed by the commerce platform 10 (e.g., relating to the customer 12) may be accessed to ensure that the customer 12 should be allowed to interact with the commerce platform 10. In certain embodiments, the computing devices 30 may also include one or more audiovisual output devices 48, which may permit customers 12 to view, hear, feel, and so forth, certain outputs (e.g., alarms, warnings, instructions, and so forth) relating to interaction with the commerce platform 10. In certain embodiments, the audiovisual output devices 48 may include video output devices (e.g., an LCD, an LED display, a CRT display, a touchscreen, etc.), speakers, and haptic feedback devices, among other examples.

In certain embodiments, the computing devices 30 may also include one or more sensors 50 that facilitate collection of information relating to the associated customers 12. For example, in certain embodiments, the one or more sensors 50 may include global positioning systems and/or facial recognitions systems, for example, configured to provide information relating to a location of the respective computing device 30 and, by extension, of a customer 12 associated with the respective computing device 30, wherein the location information may be used by the commerce platform 10 to approximate a location of the customer 12. In addition, in certain embodiments, the sensors 50 may include cameras configured to, for example, take pictures of the customers 12, which may then be managed by the commerce platform 10. In addition, in certain embodiments, the sensors 50 may include RFID readers configured to read RFID tags of, for example, certain oilfield products 18 previously utilized by the customer 12.

In certain embodiments, the computing devices 30 may also include a communication interface 52, which may include various types of standard interfaces, such as an Ethernet interface, a universal serial bus (USB), a third generation input/output (3GIO) interface, a wireless interface, a cellular interface, and/or a satellite interface, among others. In certain embodiments, the communication interface 52 may also include a communication device, such as a modem or network interface card to facilitate exchange of data with the commerce platform 10, and any other external computing devices.

### Data Assessment Services

In certain embodiments, when a customer 12 purchases data assessment services via the data assessment services module 22, a Microsoft Windows Installer (MSI) file may be available for the customer 12 to download to an associated computing device 30. In certain embodiments, the MSI file may contain an executable licensed by the oilfield services company 14, which may be executed by the customer12 via the associated computing device 30. In certain embodiments, the read only file may provide instructions to the customer 12 on running the executable file and the folder structure recommendation for storing a data source within a data path.

In certain embodiments, upon running the licensed executable on the source data, the customer 12 may receive a JavaScript open notation (JSON) file generated as an output of the volume assessment. In certain embodiments, the JSON file may consist of assessment of the data volumes of the customer source data path and may provide a total number of files, size of the files, and also would further parse the data source classifying the files as below, for example:

| **DATA FAMILY** | **DATA TYPES WITHIN DATA FAMILY** | | |
|---|---|---|---|
| WELL DATA | | • Well Header | Number of files for each Data Type & Size |
| | | • Deviation | |
| | | • Checkshot | |
| | | • Markers | |
| | | • Log Curves | |
| SEISMIC DATA | | • 2D Seismic | Number of files for each Data Type & Size |
| | | • 2D Navigation | |
| | | • 3D Seismic | |
| | | • 3D Survey Grid | |
| INTERPRETATION DATA | | • 2D Horizon | Number of files for each Data Type & Size |
| | | • 3D Horizon | |
| | | • Faults | |
| | | • Fault Boundary | |
| OTHER DATA | | • Documents | Number of files for each Data Type & Size |

In certain embodiments, along with above mentioned the data types, crawlers may also identify files which support file extensions such as ASCII (e.g., .txt, .csv, .dat, and so forth), as well as other industry standard file extensions, and may be extended to read proprietary file types associated with the oilfield services company 14. Continuous improvement techniques may be implemented to enhance the data assessment services module 22 to even more downstream and upstream oil and gas industry format files. The data assessment services module 22 are also capable of assessing the data from new and renewable energy industries. With machine learning capabilities, the data assessment services module 22 may be further enhanced by comparing industry wide file formats and differences between them.

### Cost Analyzer for OSDU Data Migration

In general, exploration and production data for customers 12 is being managed by proprietary databases associated with those customers 12. As such, any move toward OSDU begins with data migration to OSDU as per required governance and schemas. Most of the data activity is being managed by dedicated petrotechnical experts. As such, the migration of data generally requires expertise of particular domains, such as the well and seismic domain, and of OSDU services and platforms. Therefore, it is a relatively cost heavy operation for some customers 12 to have quality data migration.

In general, customers 12 that want to migrate their data to OSDU from their proprietary data stores want to know estimated total costs of migration, cloud platforms, and maintenance. In addition, customers 12 want to have mechanisms and application that can help them in optimizing the costs of migration to an OSDU platform. The embodiments described herein provide applications and mechanisms that can: (1) provide initial estimated costs of migration to customers 12 before they decide to migrate to an OSDU platform, and (2) provide initial customizable options to visualize variations among cost options so that they can choose accordingly. In summary, the cost analyzer module 24 described herein not only provides cost estimates for migration of data to an OSDU platform but also enables optimization of the provided cost estimates based on particular needs of the particular customer 12.

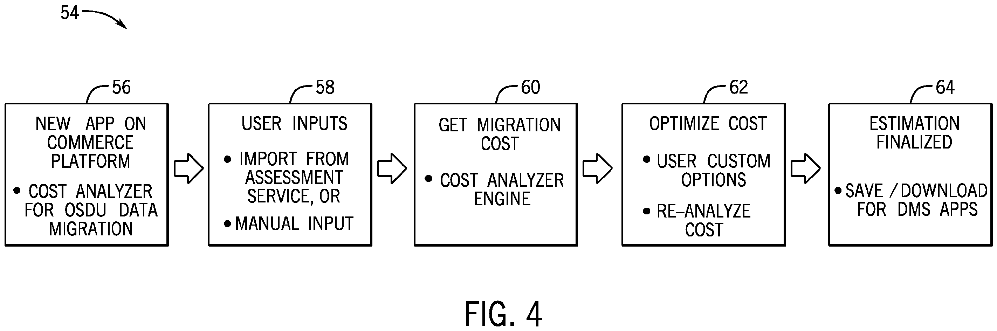

FIG. 4 illustrates a workflow 54 for utilizing the cost analyzer module 24 of the commerce platform 10 described herein. As illustrated in FIG. 4, the workflow 54 includes providing a new oilfield services management application 44 to customers 12 via the commerce platform 10 (e.g., an application to interact with the cost analyzer module 24 of the commerce platform 10) (block 56). Via the oilfield services management application 44, user inputs may be received from customers 12 relating to volumes of data, data types, data files, and so forth, which are required to be migrated to the OSDU platform (block 58). In certain embodiments, the user inputs may be directly imported automatically from an assessment service or by a user-based volume assessment performed by another application. In other embodiments, the user inputs may be manually entered by a customer 12.

Based on the user inputs, the cost analyzer module 24 may generate an overall estimation of cost of data migration to the OSDU platform (block 60). Key inputs to the cost analyzer module 24 may include, but are not limited to:
- Volume of Data & Associated Data Types
- Data Files & Size
- Cost incurred to spend resources like petrotechnical experts
- Cost to use value added services for OSDU ingestion
- Default Cloud Computing Cost
   ∘ Based on the data, the system will derive recommended cloud resources and configuration
   ∘ Based on cloud resources and configuration, yearly cloud cost may be derived

The customer 12 may then be able to ascertain the total estimated cost of migration with a summary of volume of data, data types, cloud resources considered, and so forth. At this point, the estimated cost may be optimized (block 62). As but one non-limiting example, the customer 12 may choose to reduce to fewer data types and/or data files or go below recommended cloud configuration to reduce cloud resource costs. For each customization, the customer 12 may view updated costs and decide. Once the customer 12 finalizes the options of the specific data to migrate, which cloud resources to be used, and so forth (block 64), the customer 12 may save a summary report and, in certain embodiments, may export the summary report. In certain embodiments, the exported summary may be imported to subsequent applications under data management services or, alternatively, may be sent to a cloud deployment team.

### Data Management Services

As described above, the data management services module 26 of the commerce platform 10 allows customer 12 to request services such as data loading services 26A, data ingestion services 26B, data migration services 26C, data extraction services 26D, and these services would be inclusive of data management services such as data capture services 26E, data cleansing services 26F, data standardization services 26G, and so forth. The services placeholder may have a relatively simple yet intuitive user interface wherein the end users may request a desired service from the oilfield services company 14 along with the ability to track the service request through its lifecycle.

The commerce platform 10 may also have advanced usability functionalities that enable the end users and petrotechnical experts of the oilfield services company 14 to interact with each other, at any given point of time, during the service request progress, either through online or offline means, which enable efficient delivery of the customer-desired services, ensuing quality and high customer satisfaction.

In certain embodiments, a customer 12 may upload a JSON output file of volume assessment that was generated using the data assessment services module 22, and may provide desired targets regarding how the data is to be loaded or ingested. In addition to the desired targets, in certain embodiments, the customer 12 may also choose a set of parameters supporting the selected targets from an available list of possible parameters. For example, if a target is selected for a particular service, then the customer 12 may need to select parameters regarding whether another service of the same type should be created or whether data is to be loaded within the particular service.

In certain embodiments, the customer 12 may then select a delivery preference, such as a standard priority or a high priority service request. For high priority, the service request may be fast tracked in terms of delivery, attracting higher prices, whereas a standard service request may be queued for petrotechnical experts of the oilfield services company 14 and can be taken over once other requests are resolved.

Based on the selected targets and delivery preference, a pricing quotation may be generated on an interface of the oilfield services management application 44. In certain embodiments, the quotation may include a combination of the data volume assessment JSON file, selected targets, delivery preference, and so forth. In addition, the quotation may also consider the cost of cloud provisioning obtained from the cost analyzer module 24 for OSDU data migration if the target selected is an OSDU platform within a customer cloud environment or an OSDU platform within the cloud environment 28 of the commerce platform 10. The customer 12 may then purchase the service by paying as per the presented quotation, after which a unique service request identification number may be generated.

The request may then be assigned to a petrotechnical expert of the oilfield services company 14 who would be in charge of providing the services mentioned within the service request. The petrotechnical expert may then request access to the source data to load/inject the data from the source to the desired target for the customer 12. Upon accessing the data, the petrotechnical expert may then conduct other data management tasks such as data acquiring, data cleansing, data standardization, data normalization, and so forth, in order to ensure readiness of the data to be moved to the desired targets. While the customer 12 is executing the service request, the petrotechnical expert may update the service request progress at timely intervals on the commerce platform 10, which would be visible to the customer 12.

On completion of the ordered services, the petrotechnical expert may update the status of the service request as resolved, which may then trigger a notification to the customer 12. The customer 12 may then assess the services and mark the service request as closed, after which an optional client satisfaction survey may be launched.

In certain embodiments, when updates are made via any of the services offering categories 22, 24, 26 of the commerce platform 10, the updates may be communicated to one or more computing devices 30 associated with one or more customers 12 associated with the subject oilfield services 16 and/or oilfield products 18. For example, in certain embodiments, the updates may be sent to the computing devices 30 to automatically open or execute the oilfield services management application 44 on the respective computing devices 30 such that visual representations of the updates may be presented to the respective customers 12.

### Billing Engines

For all the three services mentioned above (e.g., the data assessment services module 22, the cost analyzer module 24, and the data management services module 26) which are hosted by the commerce platform 10, a respective billing engine will be implemented. For the data assessment services module 22, the billing will be one time based on the order for downloading the MSI file for volume assessment. For the cost analyzer module 24 for OSDU data migration services, the billing will be based on the volume of data, the value added services used, man-day efforts and predetermined cloud computing and maintenance costs, and will be updated based on any customization changes made to the recommended parameters by the customer 12 via the user interface of the oilfield services management application 44. For the data management services module 26, the billing will be based on the data volume assessment JSON file from which the data s will be converted into work units, and pricing will be applied to the converted work units based on the target selected by the customer 12 and the delivery preference selected by the customer 12.

The embodiments described herein address various needs for customers 12. For example, currently, any customer 12 that orders oilfield services 16 and/or oilfield products 18 will have to track the progress of deployment of the oilfield services 16 and/or oilfield products 18 themselves. Doing so requires the customers 12 to go through a relatively complex set of logistical overheads to, for example, ensure that enterprise accounts are being setup for ordering further data management services. The customers 12 are also often required to subscribe to data management services, which incur subscription costs.

The embodiments described herein address these problems experienced by customers 12 by, for example, providing a single interface (e.g., of a single oilfield services management application 44) via the commerce platform 10 to not only order oilfield services 16 and/or oilfield products 18, but also to enable the customers 12 to order various data assessment services via the data assessment services module 22, cost analysis via the cost analyzer module 24, and data management services via the data management services module 26. This is beneficial not only for large-scale downstream and upstream oil and gas industries, but also for smaller and midstream oil and gas industries. In addition, the data management services offerings 20 provided by the commerce platform 10 are also suitable for new and renewable energy sectors. In addition, the billing engines are entirely consumption based. In addition, providing these data management services offerings 20 via a single oilfield services management application 44 enabled by the commerce platform 10 enables integration points among the various data management services offerings 20.

The embodiments described herein have several applications that benefit customers 12, as described in greater detail herein. For example, the relatively simplistic and single interface provided by the oilfield services management application 44 described herein enables customers 12 to order the data management services offerings 20 described herein. In addition, the commerce platform 10 enables the automation of data assessment handling of all subsurface complexities, as well as enabling automated and configurable pricing models. In addition, the commerce platform 10 provides a secure and personalized login experience with data security. In addition, the commerce platform 10 minimizes the number of manual interventions, thereby enabling competitive service offerings. In addition, the commerce platform 10 assists customers 12 in making decisions relating to planning migration of data to a cloud environment 28.

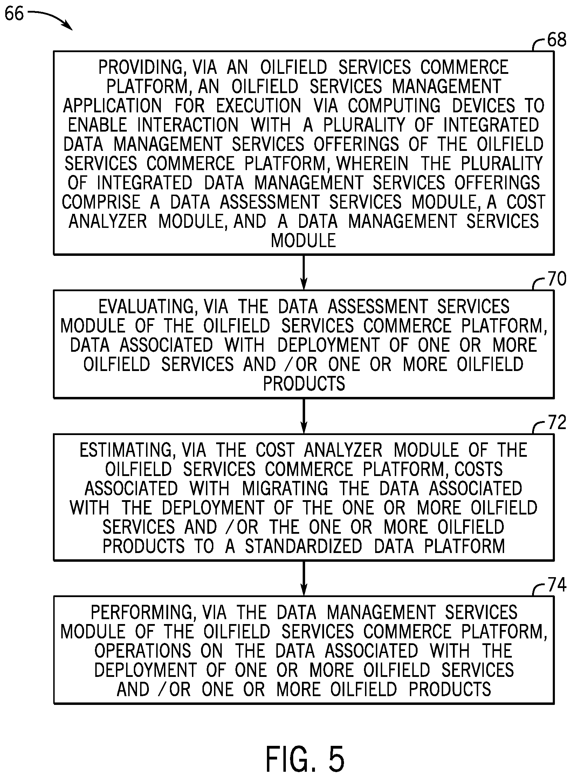

FIG. 5 is a flow diagram of a method 66 for providing a plurality of data management services offerings 20 via a single integrated oilfield services management application 44. As illustrated in FIG. 5, in certain embodiments, the method 66 may include providing, via an oilfield services commerce platform 10, an oilfield services management application 44 for execution via computing devices 30 to enable interaction with a plurality of integrated data management services offerings 20 of the oilfield services commerce platform 10 (block 68). In certain embodiments, the plurality of integrated data management services offerings 20 may include a data assessment services module 22, a cost analyzer module 24, and a data management services module 26. In addition, in certain embodiments, the method 66 may include evaluating, via the data assessment services module 22 of the oilfield services commerce platform 10, data associated with deployment of one or more oilfield services 16 and/or one or more oilfield products 18 (block 70). In addition, in certain embodiments, the method 66 may include estimating, via the cost analyzer module 24 of the oilfield services commerce platform 10, costs associated with migrating the data associated with the deployment of the one or more oilfield services 16 and/or the one or more oilfield products 18 to a standardized data platform (block 72). In addition, in certain embodiments, the method 66 may include performing, via the data management services module 26 of the oilfield services commerce platform 10, operations on the data associated with the deployment of one or more oilfield services 16 and/or one or more oilfield products 18 (block 74).

In addition, in certain embodiments, the method 66 may include generating, via the data assessment services module 22 of the oilfield services commerce platform 10, an output file representing output of a data volume assessment. In certain embodiments, the output file defines an assessment of data volumes of a customer source data path, and summarizes a total number of data files, sizes of the data files, or some combination thereof. In addition, in certain embodiments, the output file parses a data source classifying data files into one or more data families. In certain embodiments, the one or more data families may include a well data family, a seismic data family, an interpretation data family, or some combination thereof.

In addition, in certain embodiments, the method 66 may include providing, via the cost analyzer module 24 of the oilfield services commerce platform 10, an initial estimate of the costs associated with migrating the data associated with the deployment of the one or more oilfield services 16 and/or the one or more oilfield products 18 to the standardized data platform; and presenting, via the cost analyzer module 24 of the oilfield services commerce platform 10, customization options for the initial estimate via the oilfield services management application 44. In addition, in certain embodiments, the method 66 may include receiving, via the cost analyzer module 24 of the oilfield services commerce platform 10, one or more inputs from the oilfield services management application 44 relating to selected customization options; and implementing, via the cost analyzer module 24 of the oilfield services commerce platform 10, the selected customization options on the initial estimate.

In addition, in certain embodiments, the method 66 may include performing, via the data management services module 26 of the oilfield services commerce platform 10, data loading services 26A, data ingestion services 26B, data migration services 26C, data extraction services 26D, or some combination thereof. In addition, in certain embodiments, the method 66 may include performing, via the data management services module 26 of the oilfield services commerce platform 10, data capture services 26E, data cleansing services 26F, data standardization services 26G, or some combination thereof.

The specific embodiments described above have been illustrated by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

## Claims

1. An oilfield services commerce platform, comprising:
one or more processors configured to execute processor-executable instructions stored in memory media, wherein the processor-executable instructions, when executed by the one or more processors, cause the oilfield services commerce platform to provide an oilfield services management application for execution via computing devices to enable interaction with a plurality of integrated data management services offerings of the oilfield services commerce platform, wherein the integrated data management services offerings comprise:
a data assessment services module for evaluating data associated with deployment of one or more oilfield services and/or one or more oilfield products;
a cost analyzer module for estimating costs associated with migrating the data associated with the deployment of the one or more oilfield services and/or the one or more oilfield products to a standardized data platform; and
a data management services module for performing operations on the data associated with the deployment of one or more oilfield services and/or one or more oilfield products.

2. The oilfield services commerce platform of claim 1, wherein the data assessment services module is configured to generate an output file representing output of a data volume assessment.

3. The oilfield services commerce platform of claim 2, wherein the output file defines an assessment of data volumes of a customer source data path, and the output file summarizes a total number of data files, sizes of the data files, or some combination thereof and/or
wherein the output file parses a data source classifying data files into one or more data families, wherein the one or more data families preferably comprise a well data family, a seismic data family, an interpretation data family, or some combination thereof.

4. The oilfield services commerce platform of any one of the preceding claims, wherein the cost analyzer module is configured to provide an initial estimate of the costs associated with migrating the data associated with the deployment of the one or more oilfield services and/or the one or more oilfield products to the standardized data platform, and to present customization options for the initial estimate via the oilfield services management application,
wherein the cost analyzer module preferably is configured to receive one or more inputs from the oilfield services management application relating to selected customization options, and to implement the selected customization options on the initial estimate.

5. The oilfield services commerce platform of any one of the preceding claims, wherein the data management services module performs data loading services, data ingestion services, data migration services, data extraction services, or some combination thereof.

6. The oilfield services commerce platform of any one of the preceding claims, wherein the data management services module performs data capture services, data cleansing services, data standardization services, or some combination thereof.

7. A computer-implemented method, comprising:
providing, via an oilfield services commerce platform, an oilfield services management application for execution via computing devices to enable interaction with a plurality of integrated data management services offerings of the oilfield services commerce platform, wherein the plurality of integrated data management services offerings comprise a data assessment services module, a cost analyzer module, and a data management services module;
evaluating, via the data assessment services module of the oilfield services commerce platform, data associated with deployment of one or more oilfield services and/or one or more oilfield products;
estimating, via the cost analyzer module of the oilfield services commerce platform, costs associated with migrating the data associated with the deployment of the one or more oilfield services and/or the one or more oilfield products to a standardized data platform; and
performing, via the data management services module of the oilfield services commerce platform, operations on the data associated with the deployment of one or more oilfield services and/or one or more oilfield products.

8. The computer-implemented method of claim 7, comprising generating, via the data assessment services module of the oilfield services commerce platform, an output file representing output of a data volume assessment.

9. The computer-implemented method of claim 8, wherein the output file defines an assessment of data volumes of a customer source data path, and the output file summarizes a total number of data files, sizes of the data files, or some combination thereof and/or
wherein the output file parses a data source classifying data files into one or more data families, wherein the one or more data families preferably comprise a well data family, a seismic data family, an interpretation data family, or some combination thereof.

10. The computer-implemented method of any one of the preceding claims 7-9, comprising:
providing, via the cost analyzer module of the oilfield services commerce platform, an initial estimate of the costs associated with migrating the data associated with the deployment of the one or more oilfield services and/or the one or more oilfield products to the standardized data platform; and
presenting, via the cost analyzer module of the oilfield services commerce platform, customization options for the initial estimate via the oilfield services management application.

11. The computer-implemented method of claim 10, comprising:
receiving, via the cost analyzer module of the oilfield services commerce platform, one or more inputs from the oilfield services management application relating to selected customization options; and
implementing, via the cost analyzer module of the oilfield services commerce platform, the selected customization options on the initial estimate.

12. The computer-implemented method of any one of the preceding claims 7-11, comprising performing, via the data management services module of the oilfield services commerce platform, data loading services, data ingestion services, data migration services, data extraction services, or some combination thereof.

13. The computer-implemented method of any one of the preceding claims 7-12, comprising performing, via the data management services module of the oilfield services commerce platform, data capture services, data cleansing services, data standardization services, or some combination thereof.

14. An oilfield services commerce platform configured to:
provide an oilfield services management application for execution via computing devices to enable interaction with a plurality of integrated data management services offerings of the oilfield services commerce platform, wherein the integrated data management services offerings comprise:
a data assessment services module for evaluating data associated with deployment of one or more oilfield services and/or one or more oilfield products;
a cost analyzer module for estimating costs associated with migrating the data associated with the deployment of the one or more oilfield services and/or the one or more oilfield products to a standardized data platform; and
a data management services module for performing operations on the data associated with the deployment of one or more oilfield services and/or one or more oilfield products.

15. The oilfield services commerce platform of claim 14, wherein:
the data assessment services module is configured to generate an output file representing output of a data volume assessment;
the cost analyzer module is configured to provide an initial estimate of the costs associated with migrating the data associated with the deployment of the one or more oilfield services and/or the one or more oilfield products to the standardized data platform, and to present customization options for the initial estimate via the oilfield services management application; and
the data management services module performs data loading services, data ingestion services, data migration services, data extraction services, data capture services, data cleansing services, data standardization services, or some combination thereof.
